# DEMANDE DE BREVET EUROPEEN

(11) **EP 0 989 346 A1**
(43) Date de publication de la demande: **29.03.2000**
(21) Numéro de dépôt: 99402315.8
(22) Date de dépôt: 22.09.1999
(51) Int. Cl.: F16K 39/04, F16K 11/07

(54) **Distributeur hydraulique à fonctionnement symétrique**

(30) Priorité: 25.09.1998 FR 9812044
(71) Demandeur: AUTOMOBILES PEUGEOT, 75116 Paris (FR); AUTOMOBILES CITROEN, 92200 Neuilly-sur-Seine (FR)
(72) Inventeur: Baudry, Xavier, 94800 Villejuif (FR); Mare, Jean Charles, 31450 Odars (FR)
(74) Mandataire: Corret, Hélène

(57) **Abrégé**

L'invention concerne un distributeur hydraulique à au moins trois voies, comportant un tiroir hydraulique (20, 40) monté coulissant dans un alésage (31, 51) du distributeur, alésage dans lequel débouchent lesdites voies (32, 33, 34; 52, 53, 54), ledit tiroir comportant au moins un pavé (21, 41) pour ménager au moins deux orifices de contrôle (36a, 37a; 56a, 57a) au niveau desquels est généré un jet de fluide sortant ou rentrant lorsqu'ils sont actifs, en fonction des conditions d'utilisation du distributeur.

Selon l'invention, quelles que soient lesdites conditions d'utilisation, est généré au niveau de tous les orifices de contrôle (36a, 37a; 56a, 57a) lorsqu'ils sont actifs, soit un jet rentrant (38, 39), soit un jet sortant (58, 59), de telle sorte que le fonctionnement du distributeur, et en conséquence les systèmes de compensation des forces hydrodynamiques, sont symétriques par rapport audit pavé (21, 41).

L'invention s'applique notamment aux véhicules automobiles.

## Description

La présente invention concerne le domaine des distributeurs hydrauliques à tiroir.

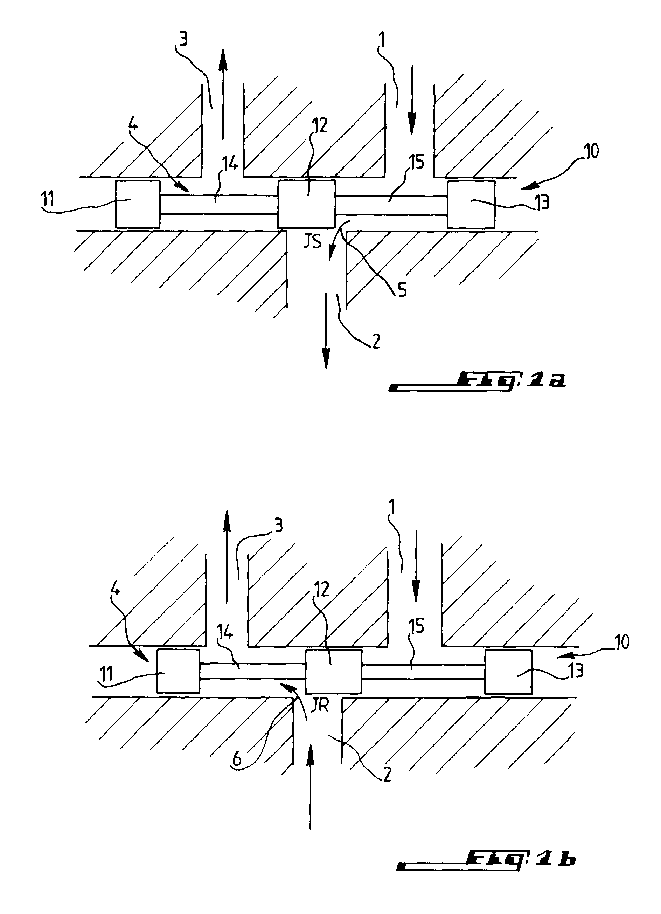

Un distributeur hydraulique classique, à trois voies, est illustré aux figures 1a et 1b. Il comprend une voie d'alimentation 1, une voie d'utilisation 2 et une voie de retour 3.

Le tiroir hydraulique 10 comprend trois pavés cylindriques 11, 12 et 13, reliés entre eux par deux tiges 14 et 15. Le tiroir 10 coulisse dans un alésage 4, également formé dans le corps du distributeur et dans lequel débouchent les trois voies 1, 2 et 3. Il est commandé par un système non illustré sur les figures.

Suivant les conditions d'utilisation du distributeur, le pavé central 12 définit avec la voie d'utilisation 2, un orifice de contrôle de la puissance hydraulique référencé 5 sur la figure 1a et référencé 6 sur la figure 1b.

Dans l'exemple illustré à la figure la, le fluide circule depuis la voie d'alimentation 1 vers la voie d'utilisation 2 et le jet de fluide représenté par la flèche JS qui est généré au niveau de l'orifice de contrôle 5 est du type sortant.

Dans l'autre exemple d'utilisation du distributeur qui est illustré à la figure 1b, le fluide circule de la voie d'utilisation 2 vers la voie de retour 3. Dans ce cas, le jet de fluide référencé JR qui est généré au niveau de l'orifice de contrôle 6 est du type rentrant.

Dans la présente description, l'expression "jet rentrant" ou "jet sortant" doit s'entendre par rapport à l'alésage 4 dans lequel coulisse le tiroir 10. Un jet "rentrant" est un jet qui pénètre dans l'alésage tandis qu'un jet "sortant" est un jet qui sort de cet alésage (donc pénètre dans l'un des conduits, par exemple le conduit 2).

Du fait de phénomènes hydrauliques connus, le tiroir hydraulique 10 illustré à la figure la est soumis à un effort parasite axial dirigé vers la droite sur le dessin. Cet effort tend donc à fermer l'orifice de contrôle 5.

De même, le tiroir hydraulique 10 illustré à la figure 1b est soumis à un effort axial dirigé vers la gauche sur le dessin, cet effort ayant également tendance à fermer l'orifice de contrôle 6.

Ces efforts parasites gênent la commande du tiroir hydraulique et il est donc nécessaire de prévoir des systèmes de compensation (non illustrés sur les figures 1a et 1b) pour éviter la fermeture non souhaitée des orifices de contrôle.

Cependant, les efforts parasites auxquels le tiroir hydraulique est soumis ne sont pas identiques dans le cas d'un jet du type rentrant et dans le cas d'un jet du type sortant.

C'est pourquoi il faut prévoir des systèmes de compensation nécessairement différents, selon la configuration d'utilisation du distributeur hydraulique (à jet rentrant ou à jet sortant).

Ceci complique la fabrication des tiroirs et augmente donc le coût des distributeurs hydrauliques. De plus, le tiroir n'étant pas symétrique, des précautions particulières doivent être prises lors de son montage dans le distributeur.

L'invention a pour but de pallier ces inconvénients en proposant un distributeur hydraulique comportant au moins trois voies et dont le fonctionnement est symétrique quelle que soit la configuration d'utilisation, des solutions identiques de compensation des efforts axiaux parasites pouvant alors être retenues.

L'invention concerne donc un distributeur hydraulique à au moins trois voies comportant un tiroir hydraulique monté coulissant dans un alésage du distributeur, alésage dans lequel débouchent lesdites voies, ledit tiroir comprenant au moins un pavé pour ménager au moins deux orifices de contrôle de la puissance hydraulique, au niveau desquels est généré un jet de fluide sortant ou rentrant, lorsque les orifices sont actifs, en fonction des conditions d'utilisation du distributeur, caractérisé en ce que, quelles que soient lesdites conditions d'utilisation, est généré au niveau de tous les orifices de contrôle lorsqu'ils sont actifs, soit un jet sortant, soit un jet rentrant, de telle sorte que le fonctionnement du distributeur hydraulique et, en conséquence, les systèmes de compensation des forces hydrauliques, sont symétriques par rapport audit pavé.

Le tiroir du distributeur hydraulique définissant avec ledit alésage au moins deux chambres de fluide et une voie d'utilisation du distributeur débouchant dans une première chambre, le distributeur hydraulique selon l'invention comprend de préférence également un conduit susceptible de relier ladite voie d'utilisation à une deuxième chambre de fluide située de l'autre côté dudit pavé par rapport à ladite première chambre.

Dans un premier mode de réalisation de l'invention, le distributeur hydraulique comprend une voie d'alimentation, une voie d'utilisation et une voie de retour, et le tiroir du distributeur définit une première et une deuxième chambres de fluide, les voies d'utilisation et d'alimentation pouvant déboucher dans ladite première chambre et ledit conduit et ladite voie de retour pouvant déboucher dans ladite deuxième chambre, les jets de fluide générés au niveau des deux orifices de contrôle par ledit pavé et d'une part, la voie d'alimentation et d'autre part, le conduit, étant du type rentrant.

Dans cette première variante, les systèmes de compensation sont de préférence prévus sur deux pavés d'extrémité dudit tiroir situés de part et d'autre du pavé central.

Pour chaque pavé d'extrémité, le système de compensation consiste avantageusement en une partie tronconique en saillie, sur une face en regard dudit pavé central.

Dans une autre variante de réalisation du distributeur hydraulique selon l'invention, celui-ci comprend une voie d'alimentation, une voie d'utilisation et une voie de retour, et le tiroir hydraulique définit une première et une deuxième chambres de fluide, les voies d'utilisation et de retour pouvant déboucher dans ladite première chambre et ledit conduit et ladite voie d'alimentation pouvant déboucher dans ladite deuxième chambre, les jets de fluide générés au niveau des deux orifices de contrôle par ledit pavé et d'une part, la voie de retour et d'autre part, ledit conduit, étant du type sortant.

Dans cette variante de réalisation, les systèmes de compensation sont avantageusement prévus sur ledit pavé lui-même.

De préférence, chaque système de compensation consiste en une gorge annulaire située sur une face dudit pavé perpendiculaire à la direction de coulissement dudit tiroir, lesdites gorges étant symétriques.

De préférence, lesdites gorges sont conformées de façon à s'évaser en direction de la paroi cylindrique du pavé.

L'invention sera mieux comprise et d'autres buts, avantages et caractéristiques de celle-ci apparaîtront plus clairement à la lecture de la description qui suit de modes non limitatifs de réalisation de l'invention, cette description étant faite au regard des dessins annexés sur lesquels.

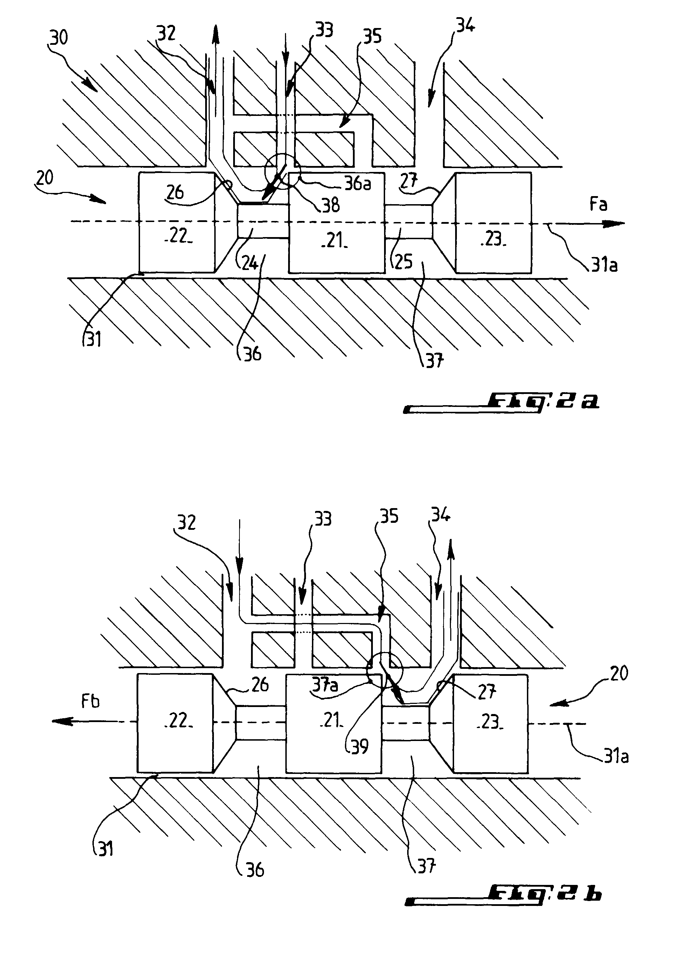

La figure 2 comprend les figures 2a et 2b qui représentent une première variante de réalisation d'un distributeur hydraulique selon l'invention : la figure 2a illustre la position du tiroir hydraulique lorsque le fluide circule depuis la voie d'alimentation vers la voie d'utilisation, tandis que la figure 2b montre la position du tiroir lorsque le fluide circule depuis la voie d'utilisation vers la voie de retour.

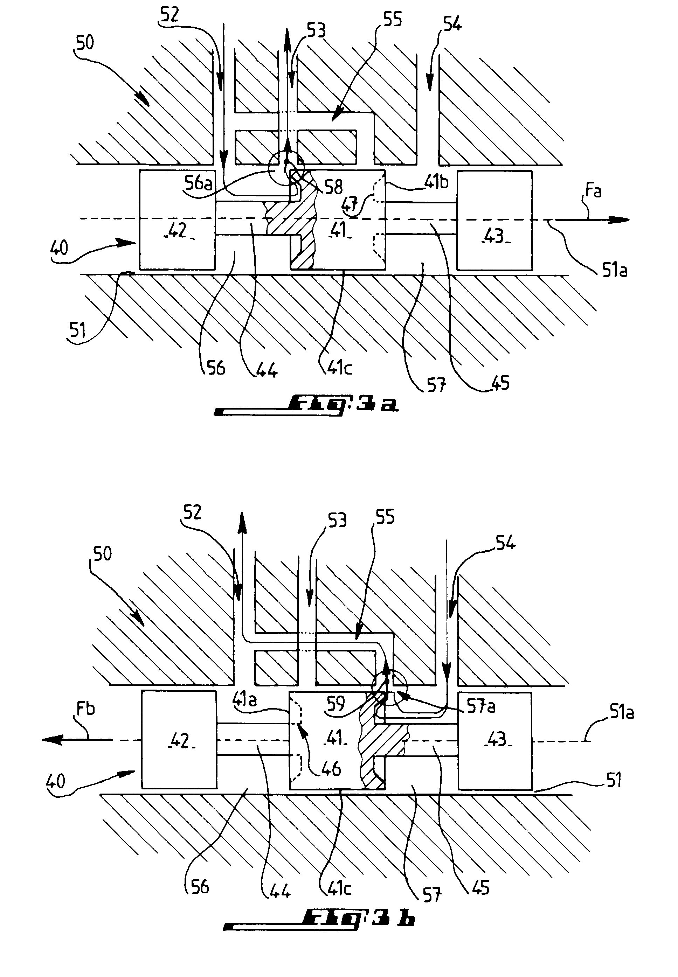

La figure 3 comporte les figures 3a et 3b qui illustrent une deuxième variante de réalisation du distributeur hydraulique selon l'invention : la figure 3a montre la position du tiroir hydraulique lorsque le fluide circule depuis la voie d'utilisation vers la voie de retour, tandis que la figure 3b montre la position du tiroir hydraulique lorsque le fluide circule depuis la voie d'alimentation vers la voie d'utilisation.

Les éléments communs aux différentes figures seront désignés par les mêmes références.

On se réfère tout d'abord aux figures 2a et 2b qui illustrent un distributeur hydraulique à trois voies comportant un tiroir hydraulique 20 monté coulissant dans un alésage 31 formé dans le corps 30 du distributeur. L'axe de cet alésage 31 porte la référence 31a.

Le distributeur hydraulique comporte une voie d'utilisation 32, une voie d'alimentation 33 et une voie de retour 34 qui sont formées dans le corps 30 et débouchent toutes dans l'alésage 31.

Il comporte également un conduit 35 qui débouche à la fois dans la voie d'utilisation 32 et dans l'alésage 31.

Par ailleurs, le tiroir 20 comporte un pavé central 21 et deux pavés d'extrémité 22 et 23, reliés respectivement audit pavé central 21 par des tiges 24, respectivement 25.

Comme indiqué précédemment au regard des figures 1a et 1b, le tiroir 20 est commandé par un système qui n'est pas illustré sur les figures.

De façon connue, les pavés d'extrémité 22 et 23 ont pour fonction d'une part, de contenir entre eux le fluide sous pression provenant de la voie d'alimentation 33 et d'autre part, de contribuer à l'équilibre statique du tiroir 20.

Le pavé central 21 définit avec le pavé d'extrémité 22 situé sur la gauche sur les figures, une première chambre de fluide 36 et avec l'autre pavé d'extrémité 23 situé à droite sur les figures, une deuxième chambre de fluide 37.

On va maintenant s'intéresser à la figure 2a qui montre la position du tiroir 20 dans le distributeur lorsque le fluide circule depuis la voie d'alimentation 33 vers la voie d'utilisation 32.

Lorsque le tiroir 20 est déplacé dans la direction et le sens indiqués par la flèche Fa, la voie d'alimentation 33 et la voie d'utilisation 32 communiquent avec la première chambre de fluide 36. Par ailleurs, le pavé central 21 bloque la communication entre le conduit 35 et la deuxième chambre de fluide 37, et donc avec la voie de retour 34.

A travers l'orifice de contrôle de la puissance hydraulique 36a alors actif, entre la voie d'alimentation 33 et le pavé central 21, est généré un jet rentrant illustré par la flèche 38.

Ce jet de fluide se développe dans la chambre 36 et ainsi, le fluide peut circuler depuis la voie d'alimentation 33 vers la voie d'utilisation 32 comme le montrent les flèches indiquées en traits fins.

On se réfère maintenant à la figure 2b qui illustre le fonctionnement du distributeur hydraulique selon cette première variante de réalisation lorsque le fluide circule depuis la voie d'utilisation vers la voie de retour.

Le tiroir 20 est déplacé dans l'alésage 31 suivant la direction et le sens illustrés par la flèche Fb. Dans ce cas, le pavé central 21 ferme la voie d'alimentation 33. Par ailleurs, à la fois la voie d'utilisation 32, grâce au conduit 35, et la voie de retour 34 communiquent avec la deuxième chambre de fluide 37.

Au niveau de l'orifice de contrôle 37a, situé entre le conduit 35 et le pavé central 21 et alors actif, est généré un jet de fluide qui est illustré par la flèche 39. Ce jet de fluide est également du type rentrant, comme celui créé dans les conditions d'utilisation du distributeur hydraulique illustrées à la figure 2a.

Ce jet de fluide 39 se développe dans la deuxième chambre 37 du distributeur hydraulique.

Le fluide peut alors circuler depuis la voie d'utilisation 32 vers la voie de retour 34, comme montré par les flèches en traits fins sur la figure 2b.

Ainsi, quelles que soient les conditions d'utilisation du distributeur hydraulique illustré sur les figures 2a et 2b et, en conséquence, quel que soit l'orifice de contrôle actif 36a ou 37a, le jet de fluide 38 ou 39 est donc toujours du type rentrant, puisque l'écoulement du fluide est dirigé du corps 30 vers le tiroir 20 (le fluide pénètre dans la chambre 36 ou 37).

L'écoulement du fluide étant géométriquement identique, la première et la deuxième chambres de fluide 36 et 37 étant identiques, ses caractéristiques sont également identiques.

Ainsi, les efforts axiaux parasites exercés sur le tiroir hydraulique 20 ne sont pas éliminés, mais ils peuvent être compensés efficacement avec la même solution de compensation.

Pour l'exemple de distributeur hydraulique illustré aux figures 2a et 2b, ces systèmes de compensation sont constitués par une partie tronconique 26, 27, disposée sur chaque pavé d'extrémité du tiroir 22, 23. Ces parties tronconiques sont disposées en regard du pavé central 21, en saillie par rapport à ces pavés d'extrémité 22 et 23.

Chacune de ces parties tronconiques 26, 27 s'étend depuis le bord de la paroi cylindrique de chaque pavé d'extrémité 22, 23 jusqu'à une extrémité de la tige 24, 25 qui les relie au pavé central 21.

D'autres systèmes de compensation pourraient bien sûr être prévus.

Il est cependant essentiel de noter qu'ils sont symétriques par rapport au pavé central 21. Ceci permet de simplifier la conception et la fabrication du tiroir hydraulique et d'éliminer les problèmes liés à son montage correct dans l'alésage 31 du distributeur hydraulique.

On se réfère maintenant aux figures 3a et 3b qui illustrent une autre variante de réalisation d'un distributeur hydraulique selon l'invention, à trois voies.

Dans le corps 50 du distributeur hydraulique est ménagé un alésage cylindrique 51 dont l'axe porte la référence 51a.

Dans cet alésage 51, un tiroir 40 est monté coulissant axialement.

Ce tiroir 40 comporte, comme le tiroir 20 illustré aux figures 2a et 2b, un pavé central 41 relié à deux pavés d'extrémité 42 et 43 par des tiges axiales 44 et 45.

Dans le corps 50 du distributeur hydraulique sont ménagées une voie d'utilisation 52, une voie de retour 53 et une voie d'alimentation 54, ainsi qu'un conduit 55 permettant de relier la voie d'utilisation 52 à l'alésage 51.

Une première chambre de fluide 56 est définie entre le pavé d'extrémité 42 situé à gauche des figures 3a et 3b et le pavé central 41, et une deuxième chambre de fluide 57 est ménagée entre le pavé d'extrémité 43 situé à droite sur les figures 3a et 3b et le pavé central 41.

On se réfère maintenant à la figure 3a qui illustre la position du tiroir hydraulique 40 lorsque le fluide circule depuis la voie d'utilisation 52 vers la voie de retour 53.

Dans ce cas, le tiroir 40 est déplacé selon la direction et le sens illustrés par la flèche Fa sur la figure 3a.

Dans cette position, le pavé central 41 bloque l'orifice du conduit 55, qui ne communique donc pas avec la deuxième chambre 57, et, par conséquent, ne communique pas non plus avec la voie d'alimentation 54.

Par ailleurs, au niveau de l'orifice de contrôle 56a ménagé entre le pavé central 41 et la voie de retour 53, qui est alors actif, est généré un jet de fluide portant la référence 58. Ce jet 58 est du type sortant, puisque l'écoulement du fluide est dirigé depuis le tiroir 40 vers le corps 50 du distributeur hydraulique (le fluide sort de la chambre 56). Le fluide circule donc bien depuis la voie d'utilisation 52 vers la voie de retour 53, comme indiqué par les flèches en traits fins.

On se réfère maintenant à la figure 3b qui illustre une autre condition d'utilisation du distributeur hydraulique.

Dans ce cas, le tiroir 40 est déplacé suivant la direction et le sens de la flèche référencée Fb sur la figure 3b.

Dans cette position, le pavé central 41 bloque l'orifice de la voie de retour 53 qui ne communique donc pas avec la première chambre 56, et donc pas avec la voie d'utilisation 52.

Par ailleurs, au niveau de l'orifice de contrôle 57a, entre le pavé central 41 et le conduit 55, alors actif, un jet de fluide référencé 59 est généré.

Ce jet de fluide est, comme le jet 58 de la figure 3a, du type sortant, puisque l'écoulement du fluide est dirigé depuis le tiroir 40 vers le corps 50 du distributeur hydraulique (le fluide sort de la chambre 57).

Le fluide circule alors depuis la voie d'alimentation 54 vers la voie d'utilisation 52 par l'intermédiaire du conduit 55.

Ainsi, dans les deux conditions d'utilisation illustrées aux figures 3a et 3b, les jets de fluide 58, 59 générés au niveau des orifices de contrôle 56a et 57a sont tous les deux des jets du type sortant.

Ainsi, comme pour la première variante de réalisation du distributeur hydraulique illustrée à la figure 2, des systèmes de compensation identiques peuvent être prévus.

Comme l'illustrent les figures 3a et 3b, chaque système de compensation est constitué par une gorge annulaire 46, 47, située sur une des faces 41a, 41b du pavé central 41, en regard d'un pavé d'extrémité 42, 43, ces faces 41a et 41b étant donc perpendiculaires à la direction de coulissement du tiroir 40.

Ces deux gorges annulaires 46 et 47 sont réalisées de façon symétrique.

Les figures 3a et 3b montrent que ces gorges présentent de préférence une forme qui va en s'évasant vers la paroi cylindrique 41c du pavé.

Cette deuxième variante de réalisation du distributeur hydraulique selon l'invention montre encore qu'il présente l'avantage de pouvoir compenser les efforts parasites axiaux auxquels le tiroir est soumis, par des solutions de compensation identiques, ce qui présente des avantages en termes de coûts et de simplicité de montage, et simplifie aussi la conception du distributeur.

La description qui précède concerne deux variantes de réalisation du dispositif hydraulique selon l'invention, mais cette dernière n'est bien sûr pas limitée à celles-ci.

Par ailleurs, ces deux variantes de réalisation concernent un distributeur hydraulique à trois voies, mais l'invention peut également trouver application pour des distributeurs hydrauliques comportant plus de trois voies.

Les signes de référence insérés après les caractéristiques techniques figurant dans les revendications ont pour seul but de faciliter la compréhension de ces dernières et ne sauraient en limiter la portée.

## Revendications

1. Distributeur hydraulique à au moins trois voies comportant un tiroir hydraulique (20, 40) monté coulissant dans un alésage (31, 51) du distributeur, alésage dans lequel débouchent lesdites voies (32, 33, 34; 52, 53, 54), ledit tiroir (20, 40) comprenant au moins un pavé (21, 41) pour ménager au moins deux orifices de contrôle (36a, 37a ; 56a, 57a) de la puissance hydraulique, au niveau desquels est généré un jet de fluide sortant ou rentrant lorsque ces orifices sont actifs, en fonction des conditions d'utilisation du distributeur, caractérisé en ce que, quelles que soient lesdites conditions d'utilisation, est généré au niveau de tous les orifices de contrôle (36a, 37a; 56a, 57a) lorsqu'ils sont actifs, soit un jet rentrant (38, 39), soit un jet sortant (58, 59), de telle sorte que le fonctionnement du distributeur et, en conséquence, les systèmes de compensation des forces hydrodynamiques, sont symétriques par rapport audit pavé (21, 41).

2. Distributeur hydraulique selon la revendication 1, ledit tiroir (21, 41) définissant avec ledit alésage (31, 51) au moins deux chambres de fluide (36, 37; 56, 57) et une voie d'utilisation (32, 52) du distributeur débouchant dans une première chambre (36, 56), ce distributeur étant caractérisé en ce qu'il comprend en outre un conduit (35, 55) susceptible de relier ladite voie d'utilisation (32, 52) à une deuxième chambre (37, 57) située de l'autre côté dudit pavé (21, 41), par rapport à ladite première chambre (36, 56).

3. Distributeur selon la revendication 1 ou 2, comprenant une voie d'alimentation (33), une voie d'utilisation (32) et une voie de retour (34) et dont le ledit tiroir définit une première et une deuxième chambres de fluide (36, 37), ce distributeur étant caractérisé en ce que les voies d'utilisation et d'alimentation (32, 33) peuvent déboucher dans ladite première chambre (36) et en ce que ledit conduit (35) et ladite voie de retour (34) peuvent déboucher dans ladite deuxième chambre (37), les jets de fluide (38, 39) générés au niveau des deux orifices de contrôle (36a, 37a) par ledit pavé (21) et d'une part, la voie d'alimentation (33) et d'autre part, ledit conduit (35), étant du type rentrant.

4. Distributeur hydraulique selon la revendication 3, dans lequel lesdits systèmes de compensation (26, 27) sont prévus sur les deux pavés d'extrémité (22, 23) du tiroir (20) situés de part et d'autre dudit pavé central (21).

5. Distributeur hydraulique selon la revendication 4, dans lequel, pour chaque pavé d'extrémité (22, 23), le système de compensation consiste en une partie tronconique (26, 27) en saillie sur une face en regard dudit pavé central (21).

6. Distributeur hydraulique selon la revendication 1 ou 2, comprenant une voie d'alimentation (54), une voie d'utilisation (52) et une voie de retour (53) et dont le tiroir (40) définit une première et une deuxième chambres de fluide (56, 57), ce distributeur étant caractérisé en ce que les voies d'utilisation (52) et de retour (53) sont conçues pour pouvoir déboucher dans ladite première chambre (56), tandis que ledit conduit (55) et ladite voie d'alimentation (54) sont conçues pour pouvoir déboucher dans ladite deuxième chambre (57), les jets de fluide (58, 59) générés au niveau des deux orifices de contrôle (56a, 57a) définis par ledit pavé (41) et d'une part, la voie de retour (53) et d'autre part, ledit conduit (55), étant du type sortant.

7. Distributeur hydraulique selon la revendication 6, dans lequel les systèmes de compensation (46, 47) sont prévus sur ledit pavé (41) lui-même.

8. Distributeur hydraulique selon la revendication 7, dans lequel chaque système de compensation consiste en une gorge annulaire (46, 47), située sur une face (41a, 41b) dudit pavé (41) perpendiculaire à la direction de coulissement dudit tiroir, lesdites gorges étant symétriques.

9. Distributeur hydraulique selon la revendication 8, dans lequel lesdites gorges (46, 47) sont conformées de façon à s'évaser en direction de la paroi cylindrique (41c) du pavé (41).
